# EUROPEAN PATENT APPLICATION

(11) **EP 4 571 857 A1**
(43) Date of publication of application: **18.06.2025**
(21) Application number: 23216956.5
(22) Date of filing: 15.12.2023
(51) Int. Cl.: H01M 4/02, H01M 4/04, H01M 4/139

(54) **A SYSTEM FOR TREATING A COATING LAYER OF AN ELECTRODE**

(71) Applicant: Customcells Holding GmbH, 25524 Itzehoe (DE)
(72) Inventor: Paulus, Alexander, Itzehoe (DE)
(74) Representative: LKGLOBAL Lorenz & Kopf Patentanwalt Attorney at Law PartG mbB

(57) **Abstract**

The invention relates to a system (100) for treating a coating layer (140) of an electrode (120), the coating layer (140) being in an at least partially liquid state, the system (100) comprising an array of gas nozzles (110) configured to eject gas impulses (190) onto a surface of the coating layer (140) of the electrode (120) to form a plurality of cavities (200) in the coating layer (140).

## Description

### FIELD OF THE DISCLOSURE

The present disclosure relates to a system for treating a coating layer of an electrode, in particular for an energy storage device.

### BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes as a part of lithium-ion batteries and lithium metal batteries. Battery electrodes are typically conductive materials that may serve as a positive or negative terminal in a battery.

In the context of electrode production, it has been established to coat a substrate film with an active material. The first step of coating usually involves mixing active materials and different components resulting in a coating mass known as slurry. Besides the active materials, the slurry may comprise a conductive additive (e.g. carbon black or carbon nanotubes), other additives, a binder (e.g. PVDF), and a solvent. The binder may ensure a cohesive electrode structure and the slurry's adhesion to the substrate film. The conductive additives' and the additives' task may be to increase the slurry's conductivity. The solvent may facilitate the even dispersion of active materials, conductive additives, binder, and other additives, ensuring a homogeneous slurry.

The mixing process of the slurry usually comprises a step of dry mixing and a subsequent step of wet mixing. Dry mixing, using low or high energy, aim to thoroughly cover active materials with carbon black. Subsequently, wet mixing with solvent forms the slurry, initially agglomerated but may be made homogeneous through thorough stirring. Diverse mixing systems, techniques, temperatures, and stringent requirements may ensure quality. The slurry may meet specific parameters for homogeneity and viscosity for a safe coating process, considering changes over time that require rapid processing.

In a further step, the substrate film may be coated with the paste-like or almost liquid slurry using an application tool (e.g. slot die, doctor blade, anilox roller). After coating, the substrate film may pass through a drying channel. The solvent is removed from the slurry by applying heat in the drying channel.

The demand for lithium-ion batteries, especially for electric vehicles, requires higher energy capacities, cost efficiency and faster charging options. Increasing the electrode thickness is a viable strategy to improve the energy capacity of cells while reducing costs. This beneficial result comes from increasing the proportion of active material relative to inactive material within the cell. However, a higher load often results in less (i.e. slower) movement of the lithium-ions (Li-ions) across thicker electrodes due to the longer ways (i.e. increased electrode thickness). Less ion movement leads to significant fluctuations in lithium concentration from the separator to the current collector, which can limit the usable capacity of the electrodes and promote irreversible lithium plating.

Enhancing ion movement within electrodes, in particular within the active material, has been achieved through the development of pore networks, notably reducing electrode tortuosity and thereby improving both energy density and rate performance. Researchers have explored diverse techniques to engineer electrode structures featuring voids or larger pores customized to enhance electrolyte penetration and Li-ion transport. These methods encompass magnetic particle alignment, co-extrusion, controlled mud-cracking, freeze casting, and the inclusion of pore formers. Notably, the use of short-pulsed lasers has emerged to create micropores or channels within various Li-ion battery electrodes. These laser-patterned microstructures establish efficient pathways for Li-ion movement throughout the electrode, curbing electrolyte concentration discrepancies and lowering the electrochemical overpotentials that can lead to lithium plating.

However, these methods have proven to be disadvantageous in many respects.

Methods utilizing laser treatment have shown promise in laboratory settings, as outlined in the following literature:
Kriegler, Johannes, Lucas Hille, Sandro Stock, Ludwig Kraft, Jan Hagemeister, Jan Bernd Habedank, Andreas Jossen, and Michael F. Zaeh. "Enhanced performance and lifetime of lithium-ion batteries by laser structuring of graphite anodes." Applied Energy 303 (2021): 117693.
   and
Dunlap, Nathan, Dana B. Sulas-Kern, Peter J. Weddle, Francois Usseglio-Viretta, Patrick Walker, Paul Todd, David Boone et al. "Laser ablation for structuring Li-ion electrodes for fast charging and its impact on material properties, rate capability, Li plating, and wetting." Journal of Power Sources 537 (2022): 231464.

However, these methods have not yet made the transition to industrially applicable cell formats and their associated production framework.

US20220263060A1 describes a method to utilizing laser ablation to selectively remove regions of active material from lithium-ion battery electrodes during production, forming channels. However, the laser ablation may cause debris and impurities, which has to be removed by a gas source.

Furthermore, CN111710833B describes a method of pattern engraving treatment on the surface of the current collector by adopting a laser and spraying slurry on the surface of the current collector. However, with this method the pattern or structure of the active material in the electrode may be difficult to control because the treatment of the current collector affects the active material only in an indirect manner.

### SUMMARY OF THE DISCLOSURE

Currently, it remains desirable to overcome the aforementioned problems and in particular to provide a manufacturing solution for obtaining an electrode with an increased energy capacity, wherein manufacturing does not lead to debris or impurities.

Therefore, a system for treating a coating layer of an electrode is provided, wherein the coating layer is in an at least partially liquid state (i.e. not fully dried state). The system comprises an array of gas nozzles configured to eject gas impulses onto a surface of the coating layer of the electrode to form a plurality of cavities in the coating layer.

By providing such a method, the limitations of conventional techniques (as e.g. described above) may be overcome by minimizing debris or impurities in electrodes. The method may also allow to create cavities in the surface of the coating layer. It may be desirable to create as many cavities in the coating layer or its surface as possible, at least in view of maximizing the cell's performance. However, in view of maximizing the energy density, it may be desirable to limit the total number of cavities. Exemplary numbers for possible tradeoff are described below (cf. e.g. size and number if nozzles). Moreover, the method may have the potential to eliminate the need of any other process steps to produce cavities in the coating layer. The disclosed methods may potentially be faster than conventional methods requiring additional steps like a laser treatment, which may result in a reduction of energy and material demand.

The combination of the substrate foil and the applied (and wet or dried) coating layer may be termed the coated electrode or, more broadly, referred to simply as the electrode. In other words, the electrode may comprise a substrate foil and on top the (partially wet or non-solid) coating layer, which may be dried in a further step.

The coating layer may be or may comprise a slurry. A slurry may refer to a thick, liquid or viscose mixture typically composed of solid particles suspended in a liquid. The slurry may be a non-compressible suspension. The slurry may be provided in a slurry reservoir. The slurry reservoir may refer to a containment or storage area designed to hold the slurry. The slurry reservoir may be engineered to handle the specific properties of the slurry, including their density, viscosity, and flow characteristics, ensuring proper storage and controlled dispensing when needed for operations. The slurry reservoir may comprise a mixing unit configured to mix electrode coating material, electrical conductive agents (e.g. carbon black or carbon nanotubes), binding agents (e.g. PVDF), additives, and/or solvents to form a slurry. After the slurry has been applied to the substrate foil, the slurry may be dried to form a coating on the substrate foil. In other words, the coating layer may be an electrode coating layer or active layer of the electrode, which is coated on a substrate foil. The coating layer may be not fully dried.

The coating layer may comprise a metal or a mixture of metals. The metals, for example, may be selected from lithium, sodium, magnesium, aluminum, potassium and/or calcium. The thickness of the coating layer may be greater than or equal to 40 µm to less than or equal to 200 µm, optionally less than or equal to 120 µm, and in certain variations, optionally less than or equal to 60 µm. The coated electrode may have an electrode thickness of 1 µm to 500 µm, more preferably up to 200 µm.

The coated electrode, in particular the coating layer, may serve as an active material for the battery. During the operation of the battery, the active layer may be the material that may undergo a reversible electrochemical reaction during the charge and discharge process. In other words, the coated electrode or active material may be the substance that may participate in the electrochemical reactions producing the flow of electrons within the battery.

The active material, for example, for a negative battery electrode foil (i.e, anode), may comprise silicon, silicon oxides, carbon material, combinations thereof, and composites thereof. For example, the active material may comprise a silicon suboxide-carbon (SiOx/C, 1 ≤ x ≤ 2) composite. Silicon suboxide-carbon (SiOx/C, 1 ≤ x ≤ 2) composite is just one example of an active material. The examples of the active material of the positive battery electrode foil (i.e., cathode) in, for example, Li-ion batteries, include lithium cobalt oxide, lithium manganese oxides, lithium iron phosphate, lithium manganese iron phosphates, lithium nickel manganese cobalt oxide, lithium titanium oxide and lithium cobalt aluminum oxide. The active material of the battery electrode foil may be chosen to guarantee a good electrical conductivity, high thermal stability, and low resistance.

The substrate foil may be a sheet, base or underlying material onto which the coating layer or layer of another material may be applied. In the case of the coated electrode, the substrate foil may refer to the core or base material of the electrode onto which a specific electrode coating material may be applied to achieve certain properties or functions, such as enhanced conductivity, corrosion resistance, or catalytic activity. The coating layer may be an additional layer that, for example, may modify the substrate foil's surface properties or provide specific characteristics to the electrode for its intended application.

The substrate or substrate foil may serve as a positive current collector or a negative current collector. In case the substrate foil serves as a positive current collector (i.e. for the cathode), the substrate foil may be an aluminum foil, typically 15 to 20 µm thick. Aluminum may have a high conductivity and it may be rather stable even at the high potential of the positive electrode. In case the substrate foil serves as a negative current collector (i.e. for the anode), the substrate may be a copper foil, typically 8 to 18 µm thick. Aluminum would be lighter and cheaper but it may not be used at the low potential of the negative electrode due to parasitic formation of a lithium/aluminum alloy.

The substrate foil may comprise a conductive material. The conductive material may comprise, for example, copper, aluminum, nickel-coated copper foil, aluminum-coated copper foil, stainless steel foil, and/or copper-zinc alloy foil. The substrate may be a base foil and/or a mesh, such as a metal mesh. The substrate foil may be based on fiberglass with a metallic coating.

The gas nozzle may denote a specialized tool integral to manufacturing processes, particularly in applying gas impulses onto a surface of the coating layer of the electrode. Typically, the gas nozzle may feature a narrow, elongated opening through which gas, such as air, is propelled or forced. The gas nozzles may be arranged in an array, wherein the gas nozzles may be oriented in a direction which is perpendicular to a plane defined by the electrode.

When a gas impulse, emitted from one of the gas nozzles, makes contact with the surface of the coating layer of the electrode, it may have the potential to create or carve out a cavity within that coating layer. The gas impulse may be a forceful burst or jet of gas directed at the surface. When the gas impulse hits the coating layer, it may apply pressure or force to a specific area. This pressure may be intense enough to penetrate or drill into the coating layer, essentially creating a cavity. In other words, the cavity may be a hollowed-out space within the coating layer.

The cavities may be single and/or discrete holes in the coating layer caused by the gas pulses, or continuous notches/grooves in the coating layer, for example, caused by a gas stream.

The cavities might improve the overall integrity and performance of the electrode by potentially affecting conductivity, active material distribution, and the electrode's electrochemical properties. The cavities (also referred to as holes or channels) within the electrode coating may be designed to serve as ion transport pathways. The ion transport pathways or voids may be intended to facilitate better penetration of ions, especially in thicker electrodes. The ion transport pathways may enhance the movement of ions through the electrodes, which may be more challenging in thicker electrodes due to increased diffusion distances. By introducing ion transport pathways or voids during the manufacturing process, the goal may be to create more accessible and efficient routes for ions to move into and out of the electrode coating material, thereby possibly improving the overall performance and efficiency of the battery or electrochemical device. The ion transport pathways may strategically be designed to optimize ion diffusion, in particular the diffusion of lithium ion, and promote better electrochemical performance in thicker electrode structures.

The cavities or ion transport pathways may have a diameter of less than or equal to 200 µm, more preferably less than or equal to 100 µm and in certain variations, optionally less than or equal to 50 µm.

In one aspect, the gas impulses may comprise a continuous gas stream or discrete gas pulses.

While individual gas pulses or shocks may be the preferred method for creating corresponding holes, it may be possible to use a continuous airflow to generate corresponding notches.

In one aspect, the system may comprise a conveyor device for conveying the electrode in a conveying direction. Furthermore, the array of gas nozzles may be configured to eject the gas impulses to the coating layer of the conveyed electrode.

In other words, the conveyor device may be a conveyor belt configured to convey a in an electrode tape or foil. The substrate foil may be conveyed from a first position, where the coating layer is applied, to a second position, where the gas impulses are applied. The gas pulses may be cycled as a function of the conveying speed of the conveyor device. Typically, the electrode may be continuously moving. However, movement may also be interrupted each time a single gas pulses are applied.

In one aspect, the array of gas nozzles may be arranged along an axis which may be substantially perpendicular to a conveying direction of the electrode.

In other words, the axis may be in a width direction of the electrode or the electrode tape. The direction of this (central) axis of the array may also be referred to as the width direction of the array.

In one aspect, the array of gas nozzles may be configured to perform an oscillating movement in its axial direction.

In one aspect, the gas may be substantially inert to the electrode. Furthermore, the pressurized gas may comprise at least one of the following: air, helium, neon, argon, krypton, xenon, nitrogen and/or radon.

In one aspect, the system may further comprise a pressure chamber connected to the array of gas nozzles configured to supply the array of gas nozzles with pressurized gas. Optionally, the pressure chamber may comprise a gas port on one side of the array configured to receive a gas, wherein an inner diameter of the pressure chamber increases towards the gas port along the axial direction.

The pressure chamber may receive gas from least one piston and/or at least one turbine configured to supply the pressure chamber with pressurized gas. The pressure chamber may comprise valve configured to manage overpressure situations. This valve may serve the purpose of alleviating excessive pressure within the chamber. If the pressure reaches a critical point or becomes too high, the valve may function to regulate and decrease it, ensuring safe operational conditions.

In one aspect, the gas nozzles may have one of the following shapes: cylindrical, conical, venturi, flat, round, or rectangular. Furthermore, the gas nozzles may be oriented in a direction which may be perpendicular to a plane defined by the electrode.

In one aspect, the system may further comprise a housing enclosing the array of gas nozzles and the electrode. The housing may be configured to regulate the atmospheric conditions at the position where the gas impulses may be ejected onto the surface of coating layer.

In one aspect, the system may further comprise a radiation dryer configured to partially dry the coating layer in particular to dry only a surface of the coating layer, before the plurality of cavities may be formed by the array of gas nozzles.

The radiation dryer may apply any kind of radiation to the coating layer. Radiation may be, for example, infrared radiation.

In other words, radiation dryer may apply a heating, drying and/or irradiating treatment. The heating, drying and/or irradiating treatment may occur partially, implying that it might not completely dry the coating layer but only the surface of the coating layer. The purpose of this treatment may be to modify the condition or properties of the coating layer in such a way that it may enhance the formation of cavities in the coating layer. By treating the coating layer with a radiation dryer, craters may be avoided. Furthermore, strong unevenness around the created cavity may be avoided as the surface may be already partially solid. Accordingly, since the coating layer may be partially dried (i.e. its surface may be dry), the manufacturing process does not lead to impurities, as no wet slurry is blown away by the gas impulses.

In one aspect, each of the gas nozzles of the array of gas nozzles may have a diameter of 100 µm or less, optionally less than 40 µm. Furthermore, the distance between adjacent gas nozzles of the array of gas nozzles may be 400 µm or less, optionally less than 120 µm or less than 80 µm.

The dimension of the gas nozzle and the parameters of the gas pulse or gas stream (e.g. gas pressure, cycle time, speed of conveyor device) may be set such that the resulting cavities may have the following dimensions:
a cavity diameter (or width of the notch) on the surface less than 200, in particular less than 120 µm, more in particular less than 80µm, e.g. 50 µm,
a depth of the cavity (or the notch) 30 to 80 µm, e.g. 43 µm (but desirably less than the depth/thickness of the coating layer), and/or
the cavities may have each a conical form, wherein the diameter of the cavity decreases along a depth direction.

In one aspect, the array of gas nozzles may comprise more than 1000 nozzles, in particular more than 4000 or up to 5000 or even up to 8000 nozzles. Furthermore, the array of gas nozzles may have a width of 300 to 00 or even up to 800 mm or more.

The number of nozzles per mm in the width direction of the array of gas nozzles may be at least 2 per mm, optionally more than 10 per mm.

The present disclosure also relates to a manufacturing line for manufacturing an electrode. The manufacturing line may comprise a conveyor device for conveying a substrate foil in a conveying direction. Furthermore, the manufacturing line may comprise a coating device configured to coat the substrate foil with an electrode coating layer in order to obtain an electrode. Optionally, the manufacturing line may comprise a radiation dryer configured to partially dry the coating layer. Furthermore, the manufacturing line may comprise a system for treating the coating layer according to examples of the present disclosure. Furthermore, the manufacturing line may comprise a convection oven to dry the coating layer in particular dry the complete coating layer.

Drying the complete coating layer may mean not only the surface is dried, but the entire thickness of the coating layer.

The present disclosure also relates to a method of manufacturing an electrode. The method may comprise conveying a substrate foil in a conveying direction, continuous coating the substrate foil with a coating layer, ejecting gas impulses onto a surface of the coating layer, when the coating layer is still in an at least partially liquid state, to form a plurality of cavities in the coating layer.

The present disclosure also relates to an electrode for an energy storage device. The electrode may comprise a substrate foil, a coating layer on top of the substrate foil, the coating layer having a plurality of cavities. Furthermore, the cavities may have at least one of the geometric properties:
a cavity diameter on the surface of the coating layer of less than 120 µm, in particular less than 50 µm,
a depth of the cavity of 30 to 50 µm, and/or less than the thickness of the coating layer, and
a conical form where the diameter of the cavity decreases along a depth direction of the cavity.

The electrode may be optionally manufactured by a method according to examples of the present disclosure and/or by using a system according to examples of the present disclosure.

The slurry may be applied on both sides of the substrate foil. This approach may refer to double-sided (or two-sided) coating. Double-sided coating may comprise the simultaneous application of an electrode coating material from both the top and bottom of a substrate foil. Alternatively, it may involve a sequential process where the substrate foil may initially be coated from the top side, followed by a step where the substrate foil may be flipped, and the reverse side is subsequently coated from the top.

It may be that the system comprises components to better control the pressure or the quality of the cavities. For example, the system may comprise a control unit configured to control the gas pressure in the pressure chamber and/or the cycle of the gas pulses as a function of a conveying speed of the electrode. The system may further comprise a first sensor unit configured to obtain a pressure of at least one of the pulses of gas applied to the coating layer of the electrode. The system may further comprise a second sensor unit configured to obtain a shape and/or a position of at least one cavity of the plurality of cavities. The system may further comprise a conveyor roll configured to convey the electrode and to bend the electrode at the position of the array of gas nozzles.

The system may involve circuitry configured to generate diverse patterns while precisely regulating pressure. The creation of studs, essential for structuring electrodes, may require rapid opening and closing of each individual gas nozzle to produce compressed air.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 schematically shows a system 100 for treating a coating layer of an electrode comprising an array of gas nozzles 110 in a side view according to examples of the present disclosure.
Fig. 2 schematically shows the system 100 of Fig. 1 in a plan view according to examples of the present disclosure.
Fig. 3 schematically shows the system 100 of Fig. 1 in a side view and perpendicular to a conveying direction 210 according to examples of the present disclosure.
Fig. 4A schematically shows an array of gas nozzles 110 according to examples of the present disclosure.
Fig. 4B schematically shows a gas nozzle 170 according to examples of the present disclosure.
Fig. 5 schematically shows a manufacturing line 500 for manufacturing an electrode and in particular treating a coating layer of the electrode 600 to examples of the present disclosure.
Fig. 6A shows a schematic drawing of a coated electrode 600 in a side view according to examples of the present disclosure.
Fig. 6B shows a schematic drawing of a coated electrode 600 in a plan view according to examples of the present disclosure.
Fig. 7A shows a schematic drawing of a two-side coated electrode 600 according to examples of the present disclosure.
Fig. 7B shows a schematic drawing of a two-side coated electrode 600 of Fig. 7A in an alternative perspective according to examples of the present disclosure.
Fig. 8 shows a schematic drawing of a lithium-ion battery 800 during discharging with an anode 810 and a cathode 820 according to examples of the present disclosure.
Fig. 9 schematically shows a method 900 of manufacturing an electrode 600 according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

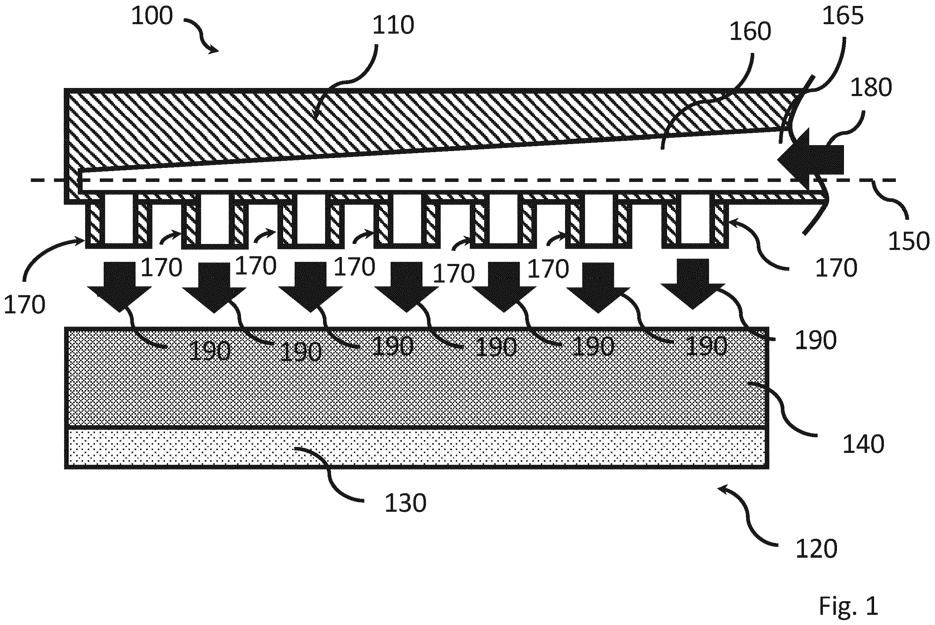

Fig. 1 schematically shows a system 100 for treating a coating layer of an electrode comprising an array of gas nozzles 110 in a side view according to examples of the present disclosure.

An electrode 120 in preparation may be provided. The electrode 120 may comprise a substrate foil 130 and a coating layer 140 applied onto the substrate foil 130. The coating layer 140 may be in an at least partially liquid state.

The system 100 may comprise an array of gas nozzles 110 configured to eject gas impulses 190 onto a surface of the coating layer 140 of the electrode 120. The array of gas nozzles 110 may comprise multiple gas nozzles 170. The array of gas nozzles 110 is arranged along an axis 150.

The system 100 may further comprise a pressure chamber 160 connected to the array of gas nozzles 110 configured to supply the array of gas nozzles 110 with pressurized gas 180. The pressure chamber 160 may comprise a gas port 165 on one side of the array configured to receive a gas. Furthermore, an inner diameter of the pressure chamber 160 may increases towards the gas port along the axial direction or the axis 150.

When one of the gas impulses 190, emitted from one of the gas nozzles 170, makes contact with the surface of the coating layer 140 of the electrode 120, it may have the potential to create or carve out a cavity within that coating layer 140. In sum, the gas impulses 190 may form a plurality of cavities in the coating layer 140. In one aspect, the gas impulses may comprise a continuous gas stream (forming elongated cavities, i.e. in the form of notches or grooves) or discrete gas pulses (forming single, discrete cavities or holes, as shown in e.g. 6A to 7B.

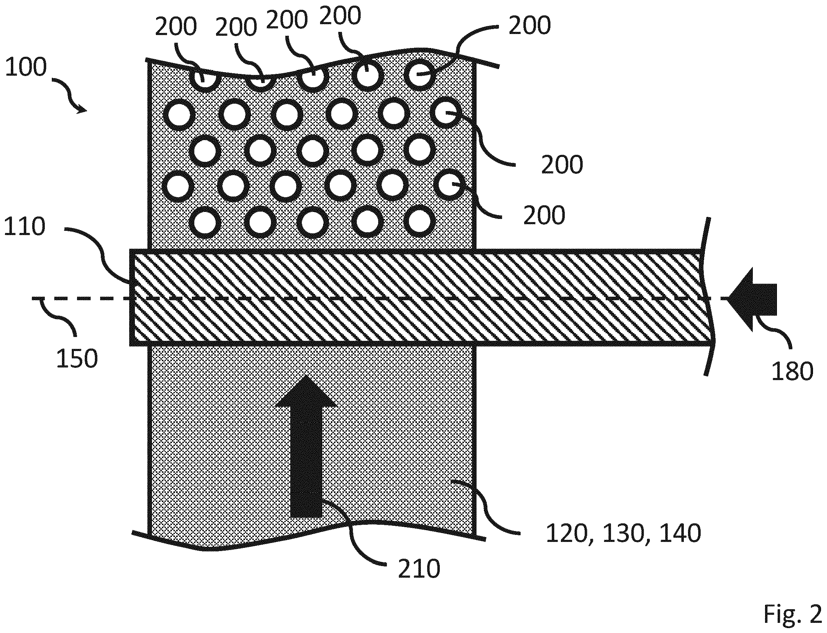

Fig. 2 schematically shows the system 100 of Fig. 1 in a plan view according to examples of the present disclosure.

The electrode 120 with the substrate foil 130 and the coating layer 140 applied onto the substrate foil 130 may be conveyed in a conveying direction 210. The array of gas nozzles 110 is arranged along the axis 150 which is substantially perpendicular to the conveying direction 210 of the electrode 120.

After treating the electrode 120 with gas impulses 190 from the array of gas nozzles 110 the electrode 120 may comprise multiple cavities 200.

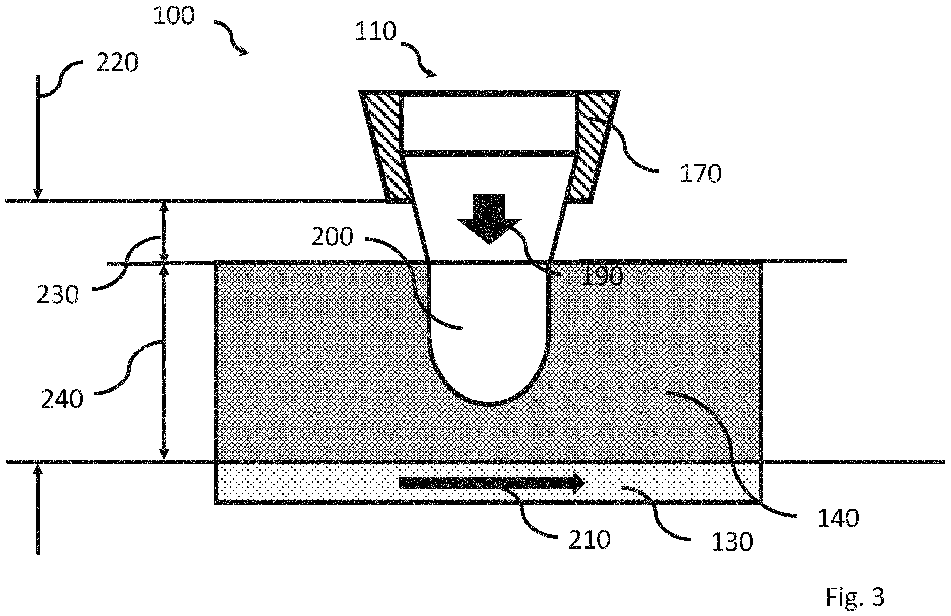

Fig. 3 schematically shows the system 100 of Fig. 1 in a side view and perpendicular to a conveying direction 210 according to examples of the present disclosure.

The gas nozzle 170 is positioned at a first distance 220 from the substrate foil 120. Additionally, the gas nozzle 170 is positioned at a second distance 230 from the substrate foil 120. The coating layer 140 may have a thickness 140 of about 80 µm in this example.

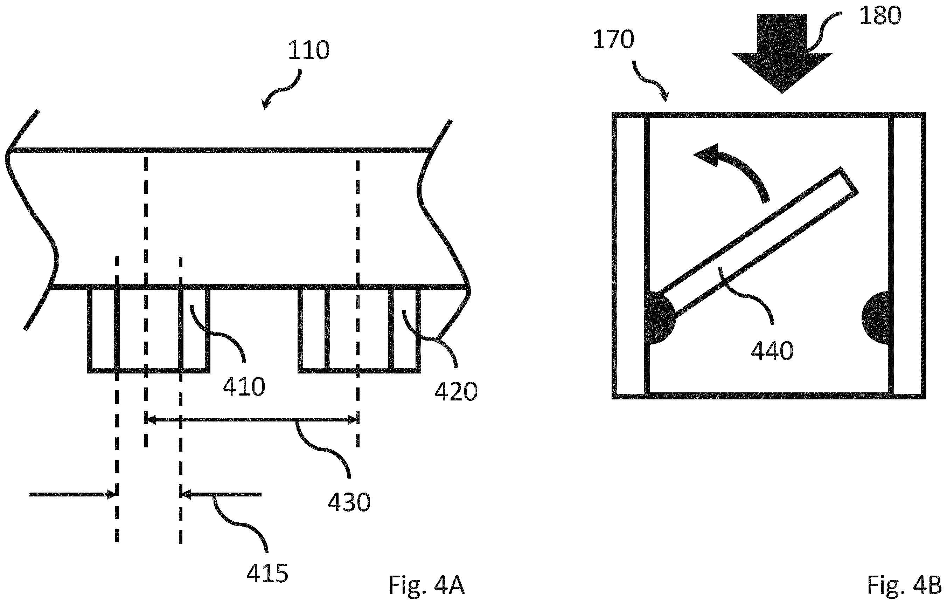

Fig. 4A schematically shows an array of gas nozzles 110 according to examples of the present disclosure.

The array of gas nozzles 110 may comprise a first gas nozzle 410 and a second gas nozzle 420. The first gas nozzle 410 and the second gas nozzle 420 are positioned at a distance 430 of about 80 µm. The first gas nozzle 410 may have a diameter 315 of about 40 µm.

Fig. 4B schematically shows a gas nozzle 170 according to examples of the present disclosure.

The gas nozzle 170 may comprise a valve 440. The valve 440 may have the function to regulate or control the flow of pressurized gas 180 passing through the nozzle 170. The valve 440 may incorporate a pivotable element designed to open and enable the passage of gas through the gas nozzle 170.

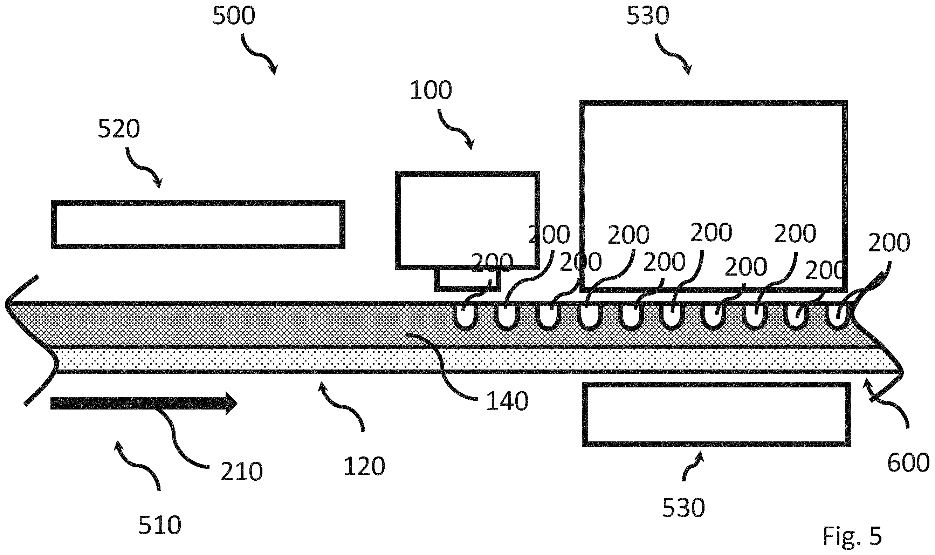

Fig. 5 schematically shows a manufacturing line 500 for manufacturing an electrode and in particular treating a coating layer of the electrode 600 to examples of the present disclosure.

The manufacturing line 500 comprises a conveying device 510, a radiation dryer 520, a system 100 and a convection oven 530.

The electrode 120 is conveyed along a conveying direction 210 by the conveying device 510. The radiation dryer 520 may partially dry the coating layer 140 of the electrode 120. The system 100 may form cavities 200 in the coating layer 140 of the electrode 120. After the cavities 200 have been formed, the electrode 120 may be treated in the convection oven 530. The finished electrode 600 may be ready for use in a battery.

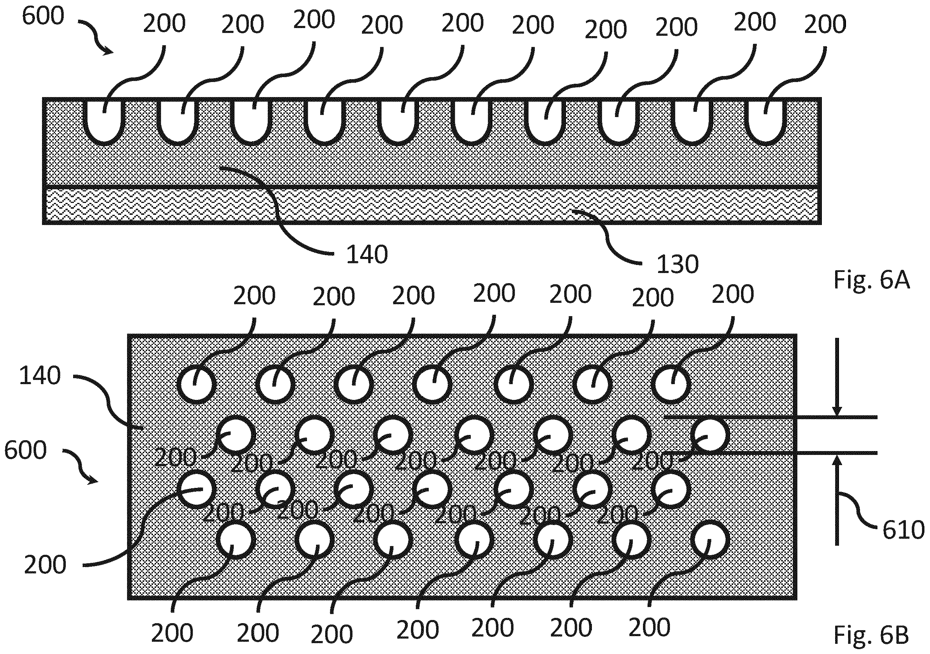

Fig. 6A shows a schematic drawing of a coated electrode 600 in a side view according to examples of the present disclosure. The coated electrode 600 may be manufactured using the system 100 according to examples of the present disclosure.

The coated electrode 600 comprises the substrate foil 130 and the coating layer 140. The one-side coated electrode 600 may serve as an anode in a lithium-ion. The substrate foil 130 may be a negative current collector. The substrate foil 130 may be a copper foil (typically 8 to 18 µm thick). As one example, the coating layer 140 may comprise graphite (95% by weight) as the active material, carbon black (1% by weight) as the conductive additive, carboxymethyl cellulose (2% by weight) as the binder, and styrene-butadiene-rubber (2% by weight) as an additive. The substrate foil 130 has a thickness of about 10 µm and the coating layer 140 has a thickness of about 80 µm in this example.

Fig. 6B shows a schematic drawing of a coated electrode 600 in a plan view according to examples of the present disclosure.

The cavities 200 may have a round cross-sectional area and a diameter 610 of less than or equal to 200 µm, more preferably less than or equal to 100 µm and in certain variations, optionally less than or equal to 50 µm. Once the electrode 600 is incorporated into a battery, the cavities 200 have the potential to be filled with electrolyte. The cavities 200 might improve the overall integrity and performance of the electrode by potentially affecting conductivity, active material distribution, and the electrode's electrochemical properties.

For optimum performance of the electrode 600, it is desirable to have as many cavities 200 or small holes as possible. The cavities 200 may be the result of a treatment with an array of gas nozzles configured to perform an oscillating movement in its axial direction. The oscillating movement may result in rows of cavities 200 that are intentionally offset from each other.

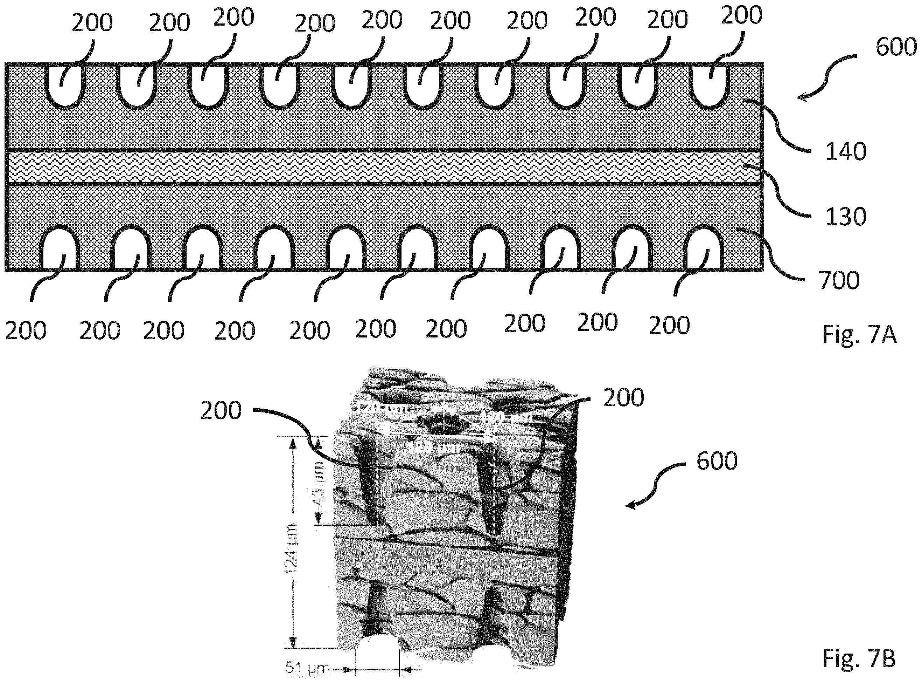

Fig. 7A shows a schematic drawing of a two-side coated electrode 600 according to examples of the present disclosure.

The two-side coated electrode 600 comprises a substrate foil 130, a top coating layer 140, and a bottom coating layer 700. In other words, top coating layer 140 and the bottom coating layer 700 may be positioned on both sides of the coated electrode 600. The preparation of the two-side coated electrode 600 may involve a sequential process where the substrate foil 130 is initially coated from the top side, followed by a step where the substrate foil 130 may be flipped, and the reverse side is subsequently coated from the top. Alternatively, the preparation of the two-side coated electrode 600 may involve the simultaneous coating from both the top and bottom of the substrate foil 130.

Both, the top coating layer 140 and the bottom layer 700 may comprise cavities 200 according to examples of the present disclosure.

Fig. 7B shows a schematic drawing of a two-side coated electrode 600 of Fig. 7A in an alternative perspective according to examples of the present disclosure.

The cavities 200 may have each a conical form, wherein the diameter of the cavity decreases along a depth direction.

The dimension of the gas nozzle and the parameters of the gas pulse or gas stream (e.g. gas pressure, cycle time, speed of conveyor device) may be set such that the resulting cavities may have the following dimensions:
a cavity diameter (or width of the notch) on the surface less than 200 µm, in particular 80µm, e.g. 51µm, and/or
a depth of the cavity (or the notch) of 30 to 80 µm, e.g. 43 µm (but desirably less than the depth/thickness of the coating layer).

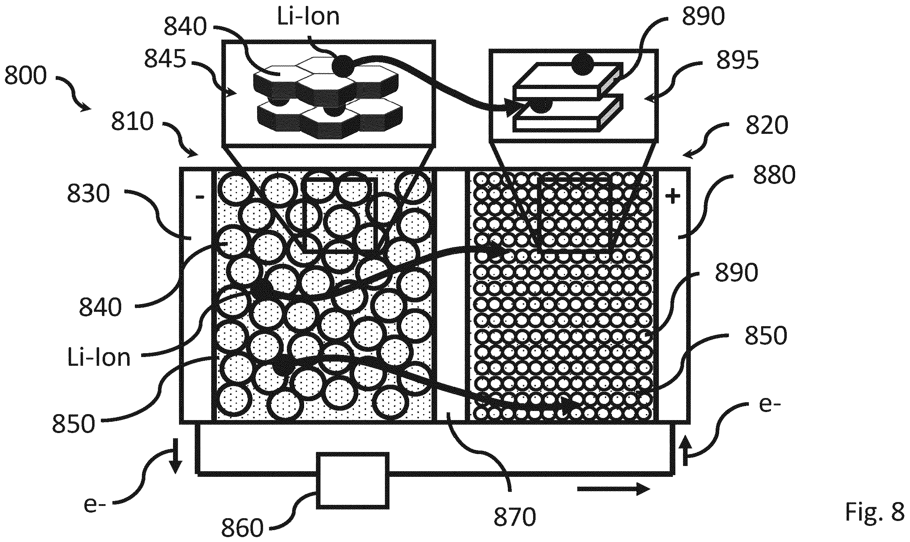

Fig. 8 shows a schematic drawing of a lithium-ion battery 800 during discharging with an anode 810 and a cathode 820 according to examples of the present disclosure. This example illustrates a basic scenario featuring two electrodes (anode 810 and cathode 820) to emphasize the roles of the components within the lithium-ion battery 800. However, it is widely acknowledged that multiple electrodes are typically stacked together to form a lithium-ion battery 800. Of course, a lithium-ion battery is only one possible use case of the coated electrodes of the present disclosure.

The anode 810 or cathode 820 may be a coated electrode according to any examples of the present disclosure. For example, the anode 810 or cathode 820 may be a one-side coated electrode 600 according to examples of the present disclosure.

The lithium-ion battery 800 may be rechargeable. In case of discharging the lithium-ion battery 800, the positive electrode is called "cathode" and the negative electrode is called "anode". This terminology is different during the charging process, where the positive electrode may work as anode and the negative electrode may work as cathode.

The anode 810 comprises a first substrate 830 and a first active material 840. The first the substrate 830 may be a copper foil, typically 8 to 18 µm thick. The cathode 820 comprises a second substrate 880 and a second active material 890. The second substrate 880 may be an aluminum foil, typically 15 to 20 µm thick. The lithium-ion battery 800 may further comprise a separator 870 that is positioned between the first active material 840 and the second active material 890. The separator 870 may be a porous membrane to electrically isolate the anode 810 and the cathode 820 from each other.

The lithium-ion battery 800 further usually comprises an ion-conducting electrolyte 850 (e.g. containing a dissociated lithium conducting salt). The ion-conducting electrolyte 850 may wet the separator 870, the first active material 840 and the second active material 890 to enable a flow of ions between the anode 810 and the cathode 820.

The lithium-ion battery 800 is connected to a load 860. Loads may be any device or component that consumes electrical energy, such as electric motors, heaters, computers, industrial machinery, light bulbs or electronic devices.

During discharging of the lithium-ion battery 800, the lithium ions (Li-Ion) may migrate from the first active material 840 of the anode 810 through the electrolyte 850 and the separator 870 to the second active material 890 of the cathode 820. Simultaneously, electrons (e-), serving as carriers of electricity, migrate from the first substrate 830 of the anode 810 through an external electrical connection (a cable), powering the load 860, and reaching the second substrate 880 of the cathode 820.

During charging, the process may be reversed: Lithium ions (Li-Ion) migrate from the second active material 890 through the electrolyte 850 and the separator 870 to the first active material 840. Simultaneously, electrons generated from an external power source move may enter the anode 810 and may provide energy to force the lithium ions back to their original location within the first active material 840.

Close-up 845 provides a schematic depiction, offering a detailed view of the process within the first active material 840. Meanwhile, close-up 895 similarly schematically illustrates the process occurring within the second active material 890 in greater detail.

A common first active material 840 of an anode 810 may be graphitic carbon, which may have a layered structure of carbon atoms in graphene layers shown in the close-up 845. During charging, lithium ions may be intercalated between the layers, and during discharging, lithium leaves the graphite. Graphite may be stable even without lithium and can be almost completely discharged. For complete discharging, the reaction at the negative electrode is:

*LiC₆* → *Li*⁺ + *e⁻* + 6C

For every mole (7g) of active lithium, six moles (72g) of carbon may act as hosts during charging.

A traditional second active material 890 of a cathode 820 is, for example, lithiated cobalt oxide (LiCoO2). The active material 890 may have a layered structure comprising cobalt, oxygen, and lithium ion layers shown in the close-up 895. During charging, lithium leaves the crystal structure (deintercalation) and returns during discharging (intercalation), but only about 50% of the lithium may be utilized. If more than half leaves, it might cause structural collapse, releasing oxygen and potentially leading to thermal runaway. For complete discharging, the reaction at the positive electrode is:

2*Li*_{0.5}*CoO*₂ + *Li*⁺ + *e*⁻ *→* 2*LiCoO*₂

To achieve complete discharging, two moles (189g) of Li0.5CoO2 may be required for every mole (7g) of active lithium.

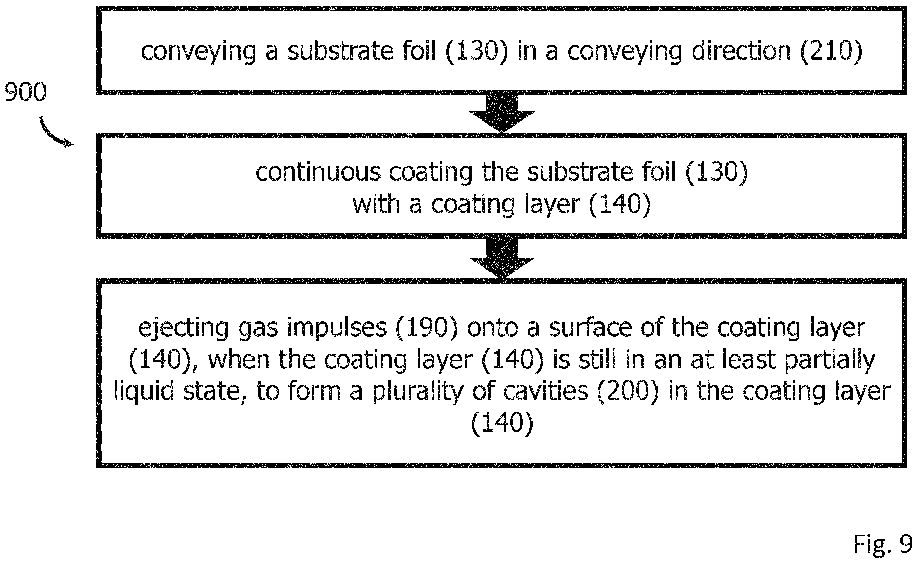

Fig. 9 schematically shows a method 900 of manufacturing an electrode 600 according to examples of the present disclosure.

In a first step, the substrate foil 130 may be conveyed in a conveying direction 210. In a second step, the substrate foil 130 may be continuously coated with a coating layer 140. In a third step, gas impulses 190 may be ejected onto a surface of the coating layer 140, when the coating layer 140 is still in an at least partially liquid state, to form a plurality of cavities 200 in the coating layer 140.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A system (100) for treating a coating layer (140) of an electrode (120), the coating layer (140) being in an at least partially liquid state, the system (100) comprising:
an array of gas nozzles (110) configured to eject gas impulses (190) onto a surface of the coating layer (140) of the electrode (120) to form a plurality of cavities (200) in the coating layer (140).

2. The system (100) according to claim 1, wherein
the gas impulses (190) comprise a continuous gas stream or discrete gas pulses.

3. The system (100) according to claim 1 or 2, further comprising:
a conveyor device for conveying the electrode (120) in a conveying direction (210), wherein
the array of gas nozzles (110) is configured to eject the gas impulses (190) to the coating layer (140) of the conveyed electrode (120).

4. The system (100) according to any one of the preceding claims, wherein
the array of gas nozzles (110) is arranged along an axis (150) which is substantially perpendicular to a conveying direction (210) of the electrode (120).

5. The system (100) according to any one of the preceding claims, wherein
the array of gas nozzles (110) is configured to perform an oscillating movement in its axial direction.

6. The system (100) according to any one of the preceding claims, wherein
the gas is substantially inert to the electrode (120) and/or wherein the pressurized gas (180) comprises at least one of the following: air, helium, neon, argon, krypton, xenon, nitrogen and/or radon.

7. The system (100) according to any one of the preceding claims,
further comprising a pressure chamber (160) connected to the array of gas nozzles (110) configured to supply the array of gas nozzles (110) with pressurized gas (180), and
optionally the pressure chamber (160) comprises a gas port on one side of the array configured to receive a gas, wherein an inner diameter of the pressure chamber (160) increases towards the gas port along the axial direction.

8. The system (100) according to any one of the preceding claims, wherein
the gas nozzles (110) have one of the following shapes: cylindrical, conical, venturi, flat, round, or rectangular, and/or
the gas nozzles (110) are oriented in a direction which is perpendicular to a plane defined by the electrode (120).

9. The system (100) according to any one of the preceding claims,
further comprising:
a housing enclosing the array of gas nozzles (110) and the electrode (120), wherein the housing is configured to regulate the atmospheric conditions at the position where the gas impulses (190) are ejected onto the surface of coating layer (140).

10. The system (100) according to any one of the preceding claims,
further comprising:
a radiation dryer (520) configured to partially dry the coating layer (140), in particular to dry only a surface of the coating layer (140), before the plurality of cavities (200) are formed by the array of gas nozzles (110).

11. The system (100) according to any one of the preceding claims, wherein
each of the gas nozzles of the array of gas nozzles (110) has a diameter of 100 µm or less, optionally less than 40 µm, and/or the distance between adjacent gas nozzles of the array of gas nozzles (110) is 400 µm or less, optionally less than 120 µm or less than 80 µm.

12. The system (100) according to any one of the preceding claims, wherein
the array of gas nozzles (110) comprises more than 1000 nozzles, in particular more than 4000 or up to 5000 nozzles, and/or
the array of gas nozzles (110) has a width of at least 300 mm, and/or,
the number of nozzles per mm in the width direction of the array of gas nozzles is at least 2 per mm, optionally more than 10 per mm.

13. A manufacturing line (500) for manufacturing an electrode (600), comprising:
a conveyor device (510) for conveying a substrate foil (130) in a conveying direction (210),
a coating device configured to coat the substrate foil (130) with an electrode (120) coating layer (140), in order to obtain an electrode (120),
optionally a radiation dryer (520) configured to partially dry the coating layer (140),
a system (100) for treating the coating layer (140) according to any of the preceding claims, and
a convection oven (530) to dry the coating layer (140), in particular dry the complete coating layer (140).

14. A method (900) of manufacturing an electrode (600), comprising:
conveying a substrate foil (130) in a conveying direction (210),
continuous coating the substrate foil (130) with a coating layer (140),
ejecting gas impulses (190) onto a surface of the coating layer (140), when the coating layer (140) is still in an at least partially liquid state, to form a plurality of cavities (200) in the coating layer (140).

15. An electrode (600) for an energy storage device (800), comprising:
a substrate foil (130),
a coating layer (140) on top of the substrate foil (130), the coating layer (140) having a plurality of cavities (200), wherein
the cavities (200) have at least one of the geometric properties:
a cavity diameter on the surface of the coating layer (140) of less than 200 µm, in particular less than 80 µm,
a depth of the cavity of 30 to 80 µm and/or less than the thickness of the coating layer (140), and
a conical form, where the diameter of the cavity decreases along a depth direction of the cavity, wherein
the electrode (600) is optionally manufactured by the method (900) of the preceding claim, and/or by using a system (100) according to any one of the preceding system claims.
